# EUROPEAN PATENT APPLICATION

(11) **EP 2 870 862 A1**
(43) Date of publication of application: **13.05.2015**
(21) Application number: 14190927.5
(22) Date of filing: 29.10.2014
(51) Int. Cl.: A01G 17/08, B25C 5/16

(54) **Binding machine for agriculture**

(30) Priority: 12.11.2013 KR 20130136753
(71) Applicant: Cho, Nam Sun, Daegu (KR)
(72) Inventor: Cho, Nam Sun, Daegu (KR)
(74) Representative: Stolmár & Partner Patentanwälte PartG mbB

(57) **Abstract**

Disclosed is a binding machine for agriculture which is configured to set a support and bind a binding tape to the support so as to allow the branches of agriculture such as grape stem, etc. to fix in place, wherein a steel needle waiting groove is formed at an inner side of the steel needle exit of the steel needle supply unit in which the binding steel needles are loaded, and the steel needle is separated from the steel needle bundle and waits in the steel needle waiting groove before the steel needle is extruded. A steel needle separation protrusion is formed at a predetermined position of a side surface formed from the steel needle extrusion plate to the steel needle waiting groove, so when extruding the separated binding steel needle, the binding steel needle which will be extruded next is separated from the steel needle bundle and waits in the waiting groove, by means of which the binding steel needles may be more smoothly extruded and formed while reducing worker's fatigue and errors in the machine along with easy-to-use performance.

## Description

### TECHNICAL FIELD

The present invention relates to a binding machine for agriculture which is configured to set a support and bind a binding tape to the support so as to allow the branches of agriculture such as grape stem, etc. to fix in place, and in particular to a binding machine for agriculture which makes it possible to alleviate worker's fatigue and improve the accuracy of a steel needle binding work while obtaining high reliability by lowering any errors in a machine in such a way that the work for extruding a binding steel needle may be smoothly performed with less force when extruding a binding steel needle of a binding machine and binding a binding tape to the branches.

### BACKGROUND ART

The binding machine for agriculture is configured in such a way that binding steel needles are attached using an adhesive for their sides to be in parallel one another and are loaded in a steel needle supply unit of the binding machine, and a steel needle extrusion plate operable by a pressing force of an operation lever is installed at an exit of thereof, and the steel needles are pushed out one by one from the steel needle supply unit and are bonded to the binding tape. In such a configuration, when the binding steel needles are extruded by pressing the operation lever, the steel needle extrusion plate separates the steel needles one by one from a steel needle bundle and pushes to the outer side of the exit and bind the steel needles to the binding tape, so such a work is continuously performed at one time. In this case, it needs to supply pressure corresponding to a predetermined force at one time, so a worker should apply a lot of force when operating the operation lever. For this reason, the worker easily gets tired due to longer working time. Since the steel needle extrusion plate may be deformed due to the resistance which occurs during the operation of the machine, the steel needle extrusion plate may not come into accurate contact with the pressing position of the binding steel needle, which results in bad binding accuracy, and erroneous operations occur, and the work efficiency is degraded.

### DISCLOSURE OF THE INVENTION

Accordingly, it is an object of the present invention to provide a binding machine for agriculture which may improve the above mentioned problems.

To achieve the above object, there is provided a binding machine for agriculture which is configured in such a way that a steel needle waiting groove is formed at an inner side of a steel needle exit of a steel needle supply unit loaded with binding steel needles, and the steel needles wait in the steel needle waiting groove before the steel needles are separated from the steel needle bundle before the steel needles are extruded, and a steel needle separation protrusion is formed at a predetermined portion of the side surface formed from the steel needle extrusion plate to the steel needle waiting groove, and when the separated binding steel needles are extruded, the binding steel needles which will be extruded next are separated from the steel needle bundle and wait in the steel needle waiting groove. Therefore, the binding steel needles may be smoothly extruded and bound, so the worker's fatigue may be alleviated, and the machine errors may be lowered, whereby it is possible to provide an easy-to-use binding machine.

### ADVANTAGEOUS EFFECTS

The present invention has advantages in the way that when the bumble of the binding steel needles is loaded in the steel needle supply unit of the binding machine body, and the operation lever is pressed to perform a binding work, and the steel needle extrusion plate is inputted inside of the input port of the steel needle exit, the steel needle extrusion plate is inputted inside of the input port and pushes the steel needles waiting inside of the steel needle exit, and the pushed steel needles pass through the binding tape and move toward the steel needle bending and forming groove, so both ends of the steel needle are bent by the steel needle bending and forming unit and are bound to the binding tape, and the cutting knife cuts a surplus outer end of the binding unit of the bound tape for thereby finishing a binding work.

Meanwhile, the present invention is characterized in that when the steel needle extrusion plate pushes the binding steel needles, the steel needle separation protrusion attached to a side surface of the binding steel needle extrusion plate separates one steel needle, which is attached to the steel needle bundle, from the bundle of the steel needles and moves toward the steel needle exit, and the separated binding steel needles wait in the waiting groove, and the binding steel needles which have been separated and are waiting in the exit are extruded onto the extrusion plate and move out of the steel needle exit and are bound to the tape. When the steel needle extrusion plate returns to the initial position, the binding steel needles which are separated from the steel needle bundle and are waiting in the waiting groove receive the pressure from the spring and move toward the steel needle exit and wait in the steel needle exit, and the front end of the steel needle bundle comes into close contact with a side surface of each of the binding steel needles waiting in the steel needle exit, and when the steel needle extrusion plate is inputted inside of the input port for the next work, the waiting binding steel needles are pushed by the steel needle extrusion plate and are moved to the steel needle exit, and the binding steel needles in the steel needle exit comes out of the exit and are bound onto the binding tape. At this time, the steel needle separation protrusion formed at a side surface of the steel needle extrusion plate comes into contact with the binding portion of the steel needle bundle and separates one steel needle, and the separated steel needle moves toward the waiting groove along the passage of the extrusion plate for thereby performing the steel needle separation work. Since the above-described procedure is repeatedly performed, the binding steel needle separation and the extrusion forming are separately performed, so it is possible to smoothly push the steel needles with less force when operating the operation lever and bind the binding tape. Any deformation of the extrusion plate may be prevented thanks to the lowered resistance that the steel needle extrusion plate receives with the aid of the above-mentioned step-by-step operations, and the machine errors may be greatly reduced, thus enhancing the reliability of the binding work while improving work efficiency.

### BRIEF DESCRIPTION OF THE DRAWINGS

The present invention will become better understood with reference to the accompanying drawings which are given only by way of illustration and thus are not limitative of the present invention, wherein;
Figure 1 is a view when viewing from a front side a state where an operation lever is operated according to the present invention;
Figure 2 is a view when viewing from a rear side a state where an operation lever is loosened according to the present invention;

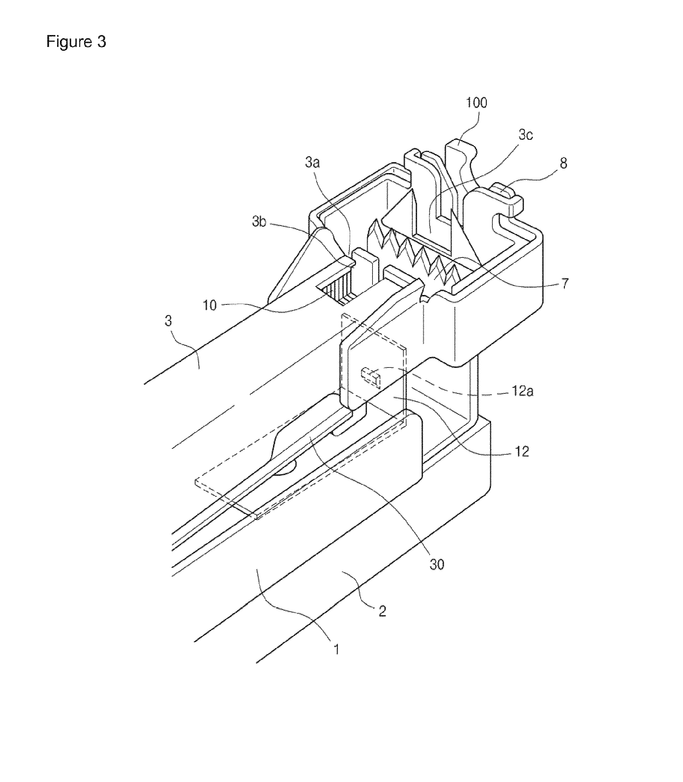

Figure 3 is an enlarged perspective view illustrating a steel needle exit according to the present invention;

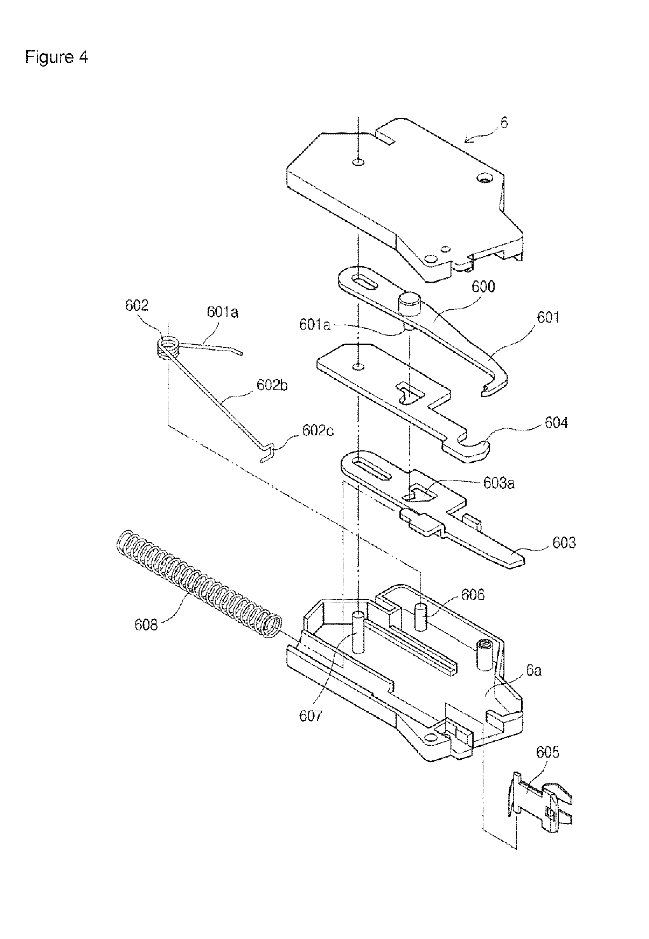

Figure 4 is a disassembled perspective view illustrating a tape pulling unit according to the present invention;

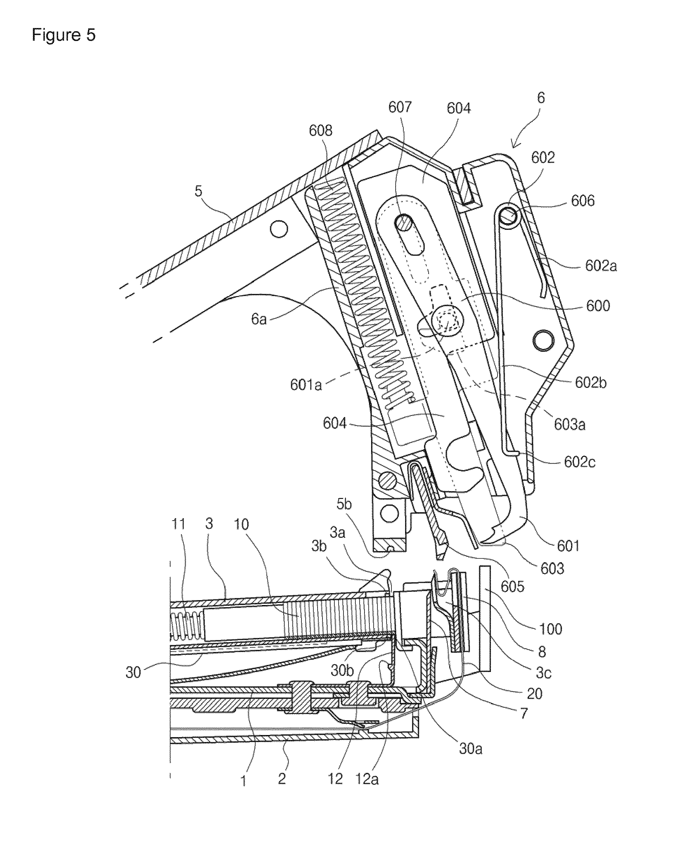

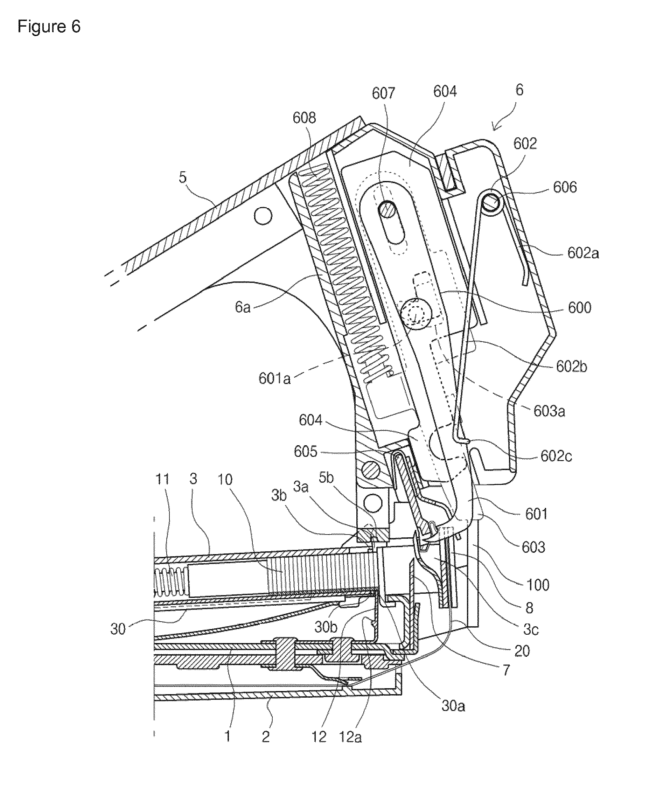

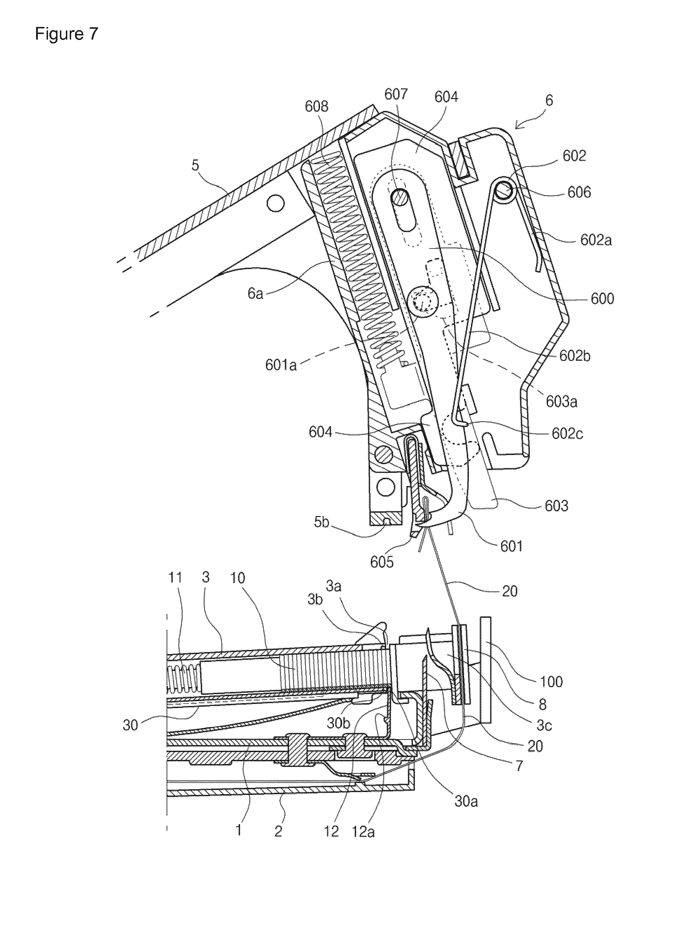

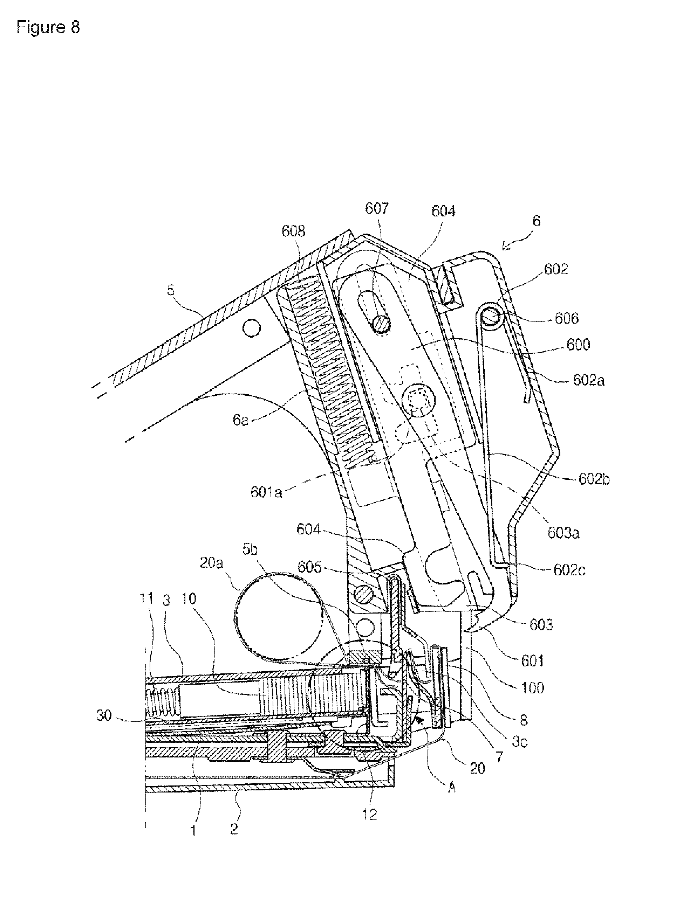

Figures 5 to 8 are views illustrating the operations of a tape pulling unit according to the present invention; and

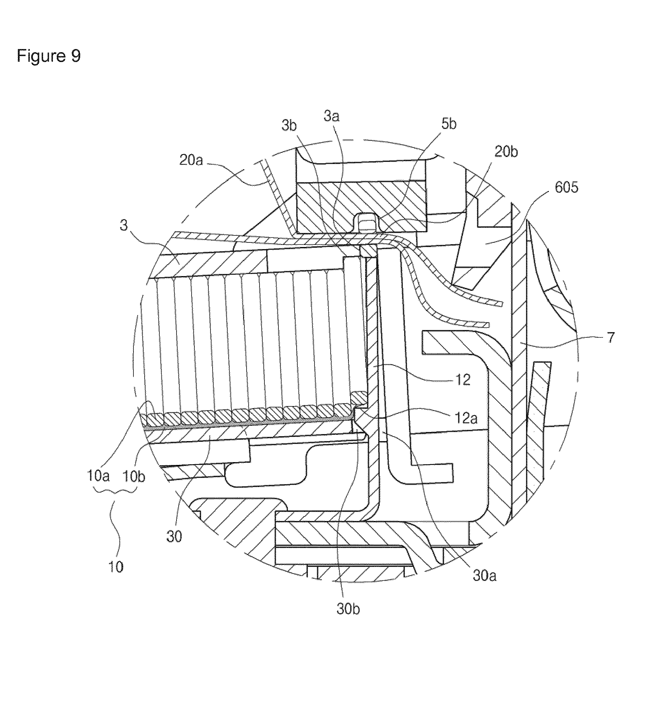

Figure 9 is a partially enlarged view of an indicated circle of Figure 9.

### MODES FOR CARRYING OUT THE INVENTION

In the present invention, the binding machine for agriculture includes a steel needle supply unit 3 which is configured to load a steel needle bundle inside of a binding machine unit 1 wherein a plurality of binding steel needles 10a are bonded to each other using an adhesive in such a way that the lateral sides of the binding steel needles are in close contact with one another, wherein a steel needle exit 3a is formed at the front end of the steel needle supply unit 3, and a spring 11 configured to push the steel needle bundle toward the steel needle exit is disposed at the opposite side; a steel needle cover 30 which is formed at an inner side of the steel needle supply unit 3, wherein an input port 30a through which a steel needle extrusion plate 12 comes in and goes out is formed at a front end thereof, wherein a steel needle extrusion plate 12 is attached thereto at a right angle with respect to the binding machine body, so one steel needle may be pushed out through the input port of the steel needle extrusion plate; and a tape cutting compartment 3c and a tape discharge compartment 8 which are provided at the front end of the binding machine body; wherein a tape accommodation compartment 2a for accommodating a tape reel is disposed at a rear end of the binding machine body 1, so the binding tape 20 may be supplied to the tape discharge compartment 8; wherein on the upper surface of the binding machine body 1, there are provided a tape pulling unit 6 and a binding steel needle bending and forming unit 5b wherein the tape pulling needle 601 is disposed at the front end of the ascending and descending operation body 5 by connecting to a rotary shaft 5a an ascending and descending operation body 5 which is driven by an operation lever 4 and returning by a return spring 501, and an operation plate 603 of the tape pulling unit 6 is pressed against an operation protrusion 100 of the binding machine body 1 by descending the ascending and descending operation body, and the pulling needle moves inward and picks up an end portion of the binding tape waiting in the tape discharge compartment for thereby forming a binding ring 20a, and both ends of the binding ring are bound with a binding steel needle 10a, and a surplus outer side of the engaging unit 20b is cut using a cutting knife 7, thus completing the winding work, wherein a steel needle waiting groove 3b is formed at an inner side surface of a boundary at the side of the steel needle supply unit in the steel needle exit 3a of the steel needle supply unit 3, and a steel needle separation protrusion 12a is formed at an inner side surface of the steel needle extrusion plate 12 by forming a width wide enough to push out one steel needle at a predetermined distance from an end portion of the steel needle extrusion plate 12 and a guide groove 30b is formed at the center of an input port 30a formed at the front end of the steel needle cover 30 in order for the steel needle separation protrusion to pass through.

Meanwhile, the tape pulling unit 6 of the present invention include a needle plate 600 which is disposed inside of the tape pulling unit 6 and has a pulling needle 601, and a needle plate pressing spring 602 configured to provide an elastic force to the needle plate wherein the needle plate pressing spring includes a support unit 602a at one end of a winding unit thereof, and the other end of the winding unit thereof extends longer than the support unit 602a, and an operation unit 602b is formed at the end portion where a hooking unit 602c is formed, for thereby forming the needle plate pressing spring. The needle plate pressing spring is inserted into a spring support rod 606 formed inside of a case 6a of the tape pulling device 6, and the support unit 602a comes into close contact with the inner wall of the case 6a, and the operation unit 602c is hooked by an outer side of the operation unit of the pulling needle 61.

In particular, the needle pressing spring 602 is characterized in that the operation unit 602b is formed more than two times longer than the length of the support unit 602a so as to have a predetermined elastic force, so it is possible to alleviate the input resistance of the pulling needle.

The exemplary embodiment of the present invention will be described in more detail with reference to the accompanying drawings.

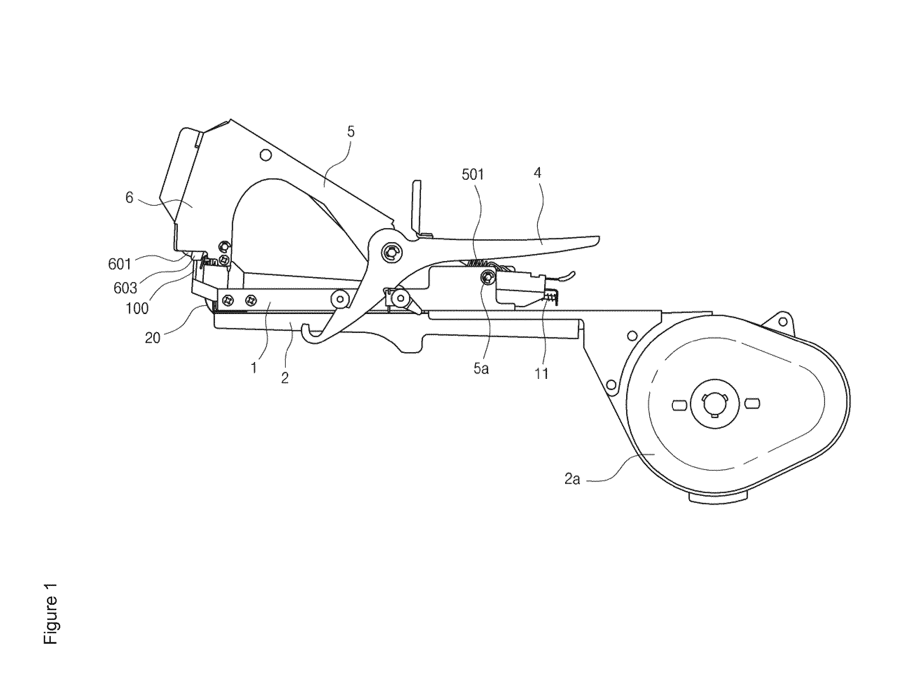

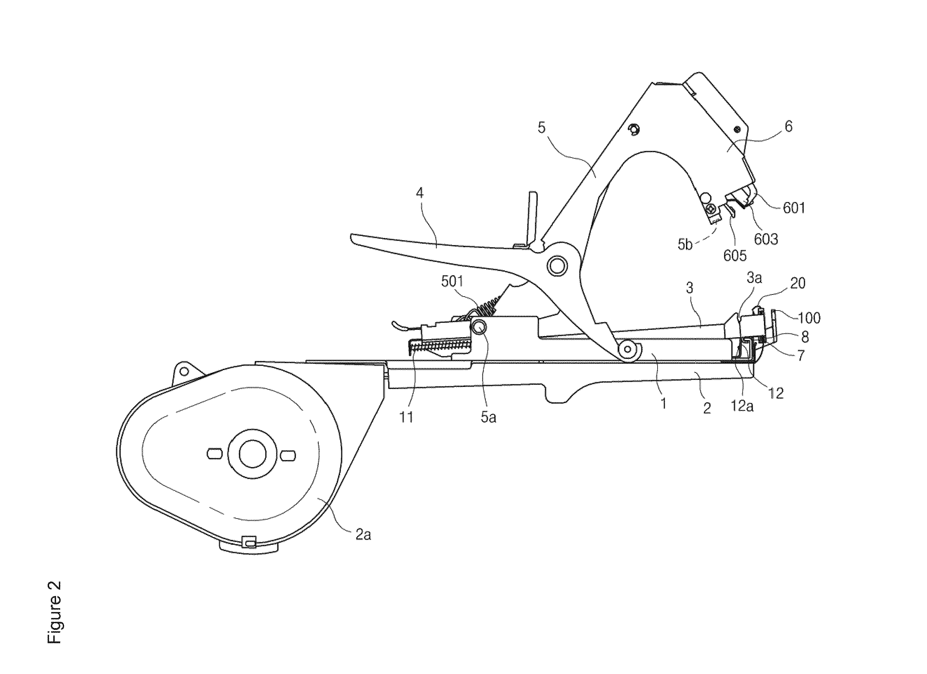

Figures 1 and 2 are side vides illustrating the embodiments of the present invention. The present invention is characterized in that the tape supply unit 2 having a tape accommodation compartment 2a is installed at the bottom of the binding machine body 1, and the steel needle supply unit 3 is installed on the top of the binding machine body 1, and the steel needle exit 3a is provided at the front end thereof, and an ascending and descending operation unit 5 having an operation lever 4 is disposed at a rotary shaft 5a above the top of the binding machine body 1, and the tape pulling unit 6 is installed at a front end of the ascending and descending operation unit 5, and the pulling needle 601 is installed inside, and the binding tape supplied through the tape supply unit 2 is withdrawn into the tape discharge compartment 8, and a binding ring 20a is made, and both ends of the binding ring 20a are tied, and a surplus outer end of the binding portion of the binding ring is cut off, so the binding work using the tape is finished.

The steel needle waiting groove 3b is formed at an inner side surface of the steel needle exit 3a of the present invention, and the binding steel needles separated from the steel needle bundle temporarily wait before the binding steel needles are extruded, and a steel needle separation protrusion 12a is formed at a side surface of the steel needle extrusion plate 12 so as to push the separated steel needles, so one of the binding steel needles attached to the steel needle bundle is separated and waits in the waiting groove.

The tape pulling unit 6 installed at the ascending and descending operation body 5 includes an installation rod 607 inside of the case 6a, and into the installation rod 607, the operation plate 603, the guide plate 604, and the pulling needle plate 600 are sequentially inserted. The needle plate pressing spring 602 is inserted into the spring support rod 606 integrally formed inside of the case 6a, and the support unit 602a ford at one end of the spring comes into close contact with the inner wall of one side of the case 6a, and the hooking unit 602c formed at the operation unit 602b of the spring is inserted into an outer side surface of the pulling needle 601 of the pulling needle plate. When the pulling needle 601 rotates about the installation rod 607 which acts like an axis, elastic force may be applied to the pulling needle 601 with the aid of the needle plate pressing sprig 602.

At this time, the operation unit 602b of the needle plate pressing spring 602 is formed about two times longer than the length of the support unit 602a. So, when the pulling needle 601 elastically operates by means of the needle plate pressing spring 602, the pulling needle 601 which receives force from the hooking unit 602c formed at the operation unit 602b receives the force from the spring more smoothly, so that when the pulling needle 601 is loaded to the front end of the binding tape so as to pull out the binding tape supplied through the tape supply unit 2, the pulling needle 601 may be more smoothly and elastically inputted for thereby preventing the input port from breaking, which results in more curate withdrawing operation of the binding tape. For this reason, the reliability of the binding work using the binding tape may be enhanced, and at the same time unnecessary damages to the binding tape may be prevented, thus saving the binding tape. In terms of the binding step of the binding tape, when the operation plate 603 is forced to face inward by descending the ascending and descending operation body, the shaft rod 601 a of the pulling needle plate 600 receives elastic force from the coil spring and remains hooked by the hooking shoulder of the top of the operation hole 603a of the center of the operation plate 603. In this state, when the operation plate 603 is forced to face inward toward the interior of the operation machine, the shaft rod 601 a of the pulling needle 601 being hooked by the hooking shoulder of the top of the operation hole 603a of the operation plate 603 descends by the elastic force of the needle plate pressing spring 602, so that the pulling needle 601 descends and moves toward the binding tape and is inputted into the end of the tape. When the ascending and descending operation body ascends, the binding tape supplied from the tape supply unit 2 is withdrawn. The withdrawn binding tape binds the support and the agriculture, and both ends of the ring are bound by extruding the binding steel needle. When the binding work is finished, the operation plate 603 and the guide plate 604 returns to the initial positions with the aid of the operation spring 608 and wait for the next operations.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

**[Legend of Reference Number]**

| | |
|---|---|
| 1: binding basic body | |
| 2: tape supply unit | 2a: tape accommodation compartment |
| 3: steel needle supply unit | 3a: steel needle exit |
| 3b: steel needle waiting groove | 3c: tape cutting compartment |
| 4: operation lever | 5: ascending and descending operation body |
| 5a: rotary shaft | 5b: binding steel needle bending and forming unit |
| 6: tape pulling unit | 6a: case |
| 7: cutting knife | 8: tape discharge compartment |
| 10: steel needle bundle | 10a: binding steel needle |
| 10b: adhesive | 11: spring |
| 12: steel needle extrusion plate | 12a: steel needle separation protrusion |
| 20: binding tape | 20a: binding ring |
| 20b: engaging unit | 30: steel needle cover |
| 30a: input port | 30b: guide groove |
| 100: operation protrusion | 501: returning spring |
| 600: needle plate | 601: tape pulling needle |
| 601a: shaft rod | 602: needle plate pressing spring |
| 602a: support unit | 602b: operation unit |
| 602c: hooking unit | 603: operation plate |
| 603a: operation hole | 604: guide plate |
| 606: spring support rod | 608: operation spring |

## Claims

1. A binding machine for agriculture, comprising;
a steel needle supply unit 3 which is configured to load a steel needle bundle inside of a binding machine unit 1 wherein a plurality of binding steel needles 10a are bonded to each other using an adhesive in such a way that the lateral sides of the binding steel needles are in close contact with one another, wherein a steel needle exit 3a is formed at the front end of the steel needle supply unit 3, and a spring 11 configured to push the steel needle bundle toward the steel needle exit is disposed at the opposite side;
a steel needle cover 30 which is formed at an inner side of the steel needle supply unit 3, wherein an input port 30a through which a steel needle extrusion plate 12 comes in and goes out is formed at a front end thereof, wherein a steel needle extrusion plate 12 is attached thereto at a right angle with respect to the binding machine body, so one steel needle may be pushed out through the input port of the steel needle extrusion plate; and
a tape cutting compartment 3c and a tape discharge compartment 8 which are provided at the front end of the binding machine body;
wherein a tape accommodation compartment 2a for accommodating a tape reel is disposed at a rear end of the binding machine body 1, so the binding tape 20 may be supplied to the tape discharge compartment 8;
wherein on the upper surface of the binding machine body 1, there are provided a tape pulling unit 6 and a binding steel needle bending and forming unit 5b wherein the tape pulling needle 601 is disposed at the front end of the ascending and descending operation body 5 by connecting to a rotary shaft 5a an ascending and descending operation body 5 which is driven by an operation lever 4 and returning by a return spring 501, and an operation plate 603 of the tape pulling unit 6 is pressed against an operation protrusion 100 of the binding machine body 1 by descending the ascending and descending operation body, and the pulling needle moves inward and picks up an end portion of the binding tape waiting in the tape discharge compartment for thereby forming a binding ring 20a, and both ends of the binding ring are bound with a binding steel needle 10a, and a surplus outer side of the engaging unit 20b is cut using a cutting knife 7, thus completing the winding work,
wherein a steel needle waiting groove 3b is formed at an inner side surface of a boundary at the side of the steel needle supply unit in the steel needle exit 3a of the steel needle supply unit 3, and a steel needle separation protrusion 12a is formed at an inner side surface of the steel needle extrusion plate 12 by forming a width wide enough to push out one steel needle at a predetermined distance from an end portion of the steel needle extrusion plate 12 and a guide groove 30b is formed at the center of an input port 30a formed at the front end of the steel needle cover 30 in order for the steel needle separation protrusion to pass through.
